# EUROPEAN PATENT SPECIFICATION

(11) **EP 1 005 435 B1**
(45) Date of publication and mention of the grant of the patent: **09.04.2003**
(21) Application number: 99928292.4
(22) Date of filing: 12.05.1999
(51) Int. Cl.: B65H 63/028, D01H 13/20, G01L 5/10

(54) **SIGNAL EMITTER**
SIGNALGEBER
EMETTEUR DE SIGNAUX

(30) Priority: 19.05.1998 SE 9801775
(43) Date of publication of application: 07.06.2000
(73) Proprietor: Eltex of Sweden AB, 343 24 Älmhult (SE)
(72) Inventor: CALMERKLINT, Roland, S-343 34 Älmhult (SE); LINDHOLM, Jonas, S-343 32 Älmhult (SE)
(74) Representative: Nilsson, Lennart
(86) International application number: SE9900802
(87) International publication number: WO99059909

(56) References cited:
- WO-A1-97/13131
- DE-A1- 4 443 716
- US-A- 3 526 130
- US-A- 3 763 701
- US-A- 4 170 951
- US-A- 5 136 202

## Description

The present invention relates to an apparatus according to the preamble to claim 1.

Such apparatuses are disclosed in WO-A1-9713131, US-A- 5736202 and US-A-3526 130.

In recent years, numerous different types of apparatuses for monitoring threads, e.g. thread tension, thread movement etc., during different phases of the machine operation cycle have been produced. Difficulties occur in particular in such machines as sewing machines, since speeds are extremely high, the time cycles involved are extremely short and the thread types highly varied. In such machines, it is desirable to monitor the thread in a stitch and thereby to be able to study one or more signals corresponding to different thread properties during the stitch operation. Prior art apparatuses have not hitherto proved to be capable of satisfying the requisite criteria. In looms, there are also extreme demands placed on the possibility of monitoring the tension, in particular in the pick in a weft.

The object forming the basis of the present invention is to realise such an apparatus.

This object is attained according to the present invention in the apparatus disclosed by way of introduction has been given the characterizing features as set forth in the appended claims.

As a result of the present invention, the apparatus thus realised has proved to satisfy extremely high demands on insensitivity to machine vibration, on simple design and construction and on low production costs. Moreover, it has proved that an apparatus according to the present invention gives an extraordinarily good signal which is clear and unambiguous, as a result of which it is possible, with great accuracy, to study and monitor only parts of the signal, e.g. from the time viewpoint, short parts of the signal, and thereby to develop such monitoring into controlling of the machine equipped with the apparatus. A prototype of the apparatus according to the present invention has further proved to be extremely resistant to machine vibration and has proved to permit the sensing of infinitesimal force magnitudes and infinitesimal changes in such force magnitudes. The apparatus according to the present invention is moreover so rapid that it may be applied for both static cycles and dynamic cycles.

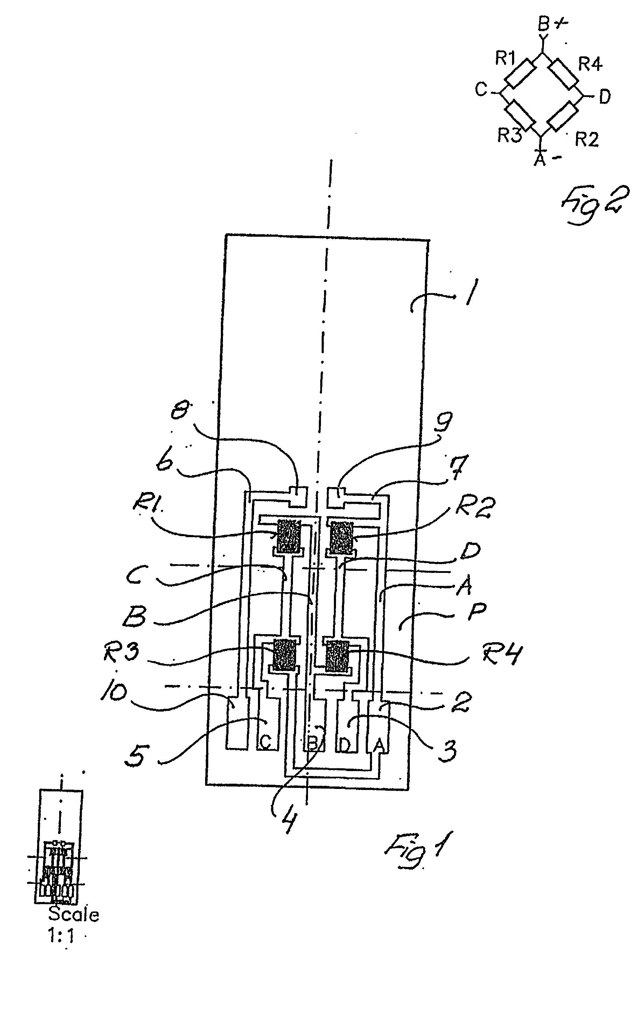

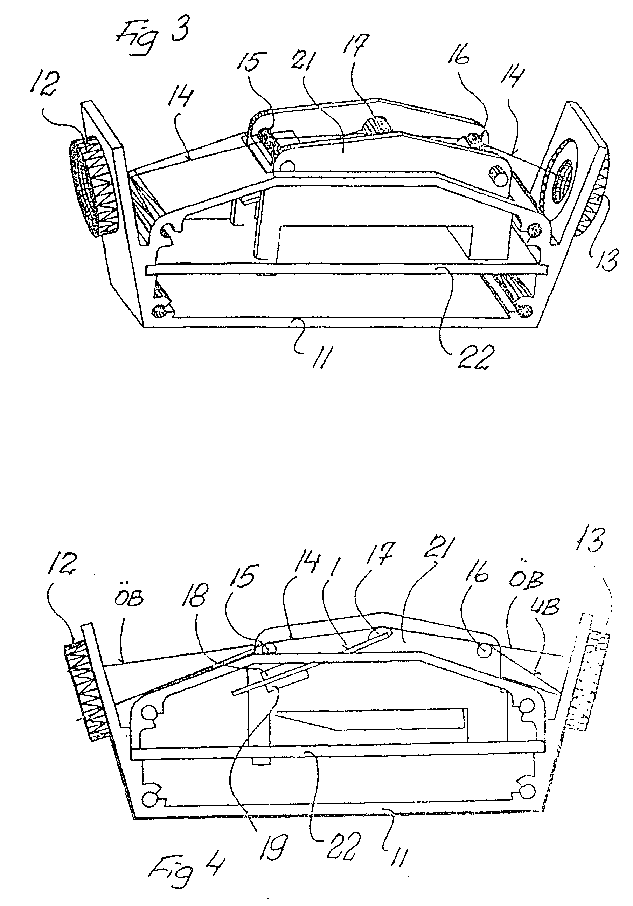

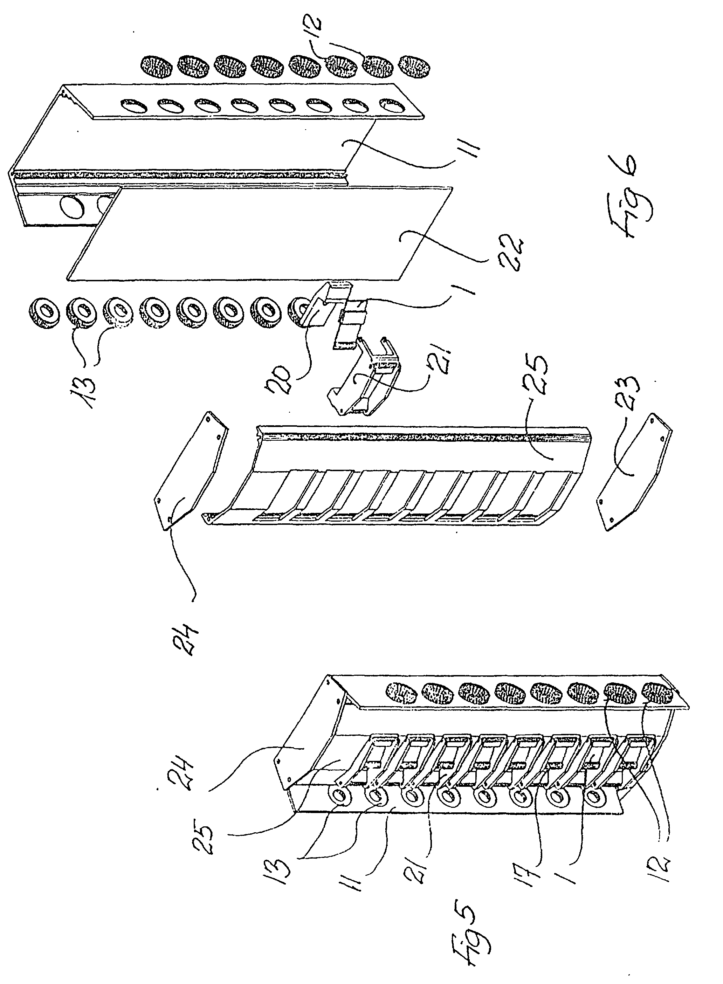

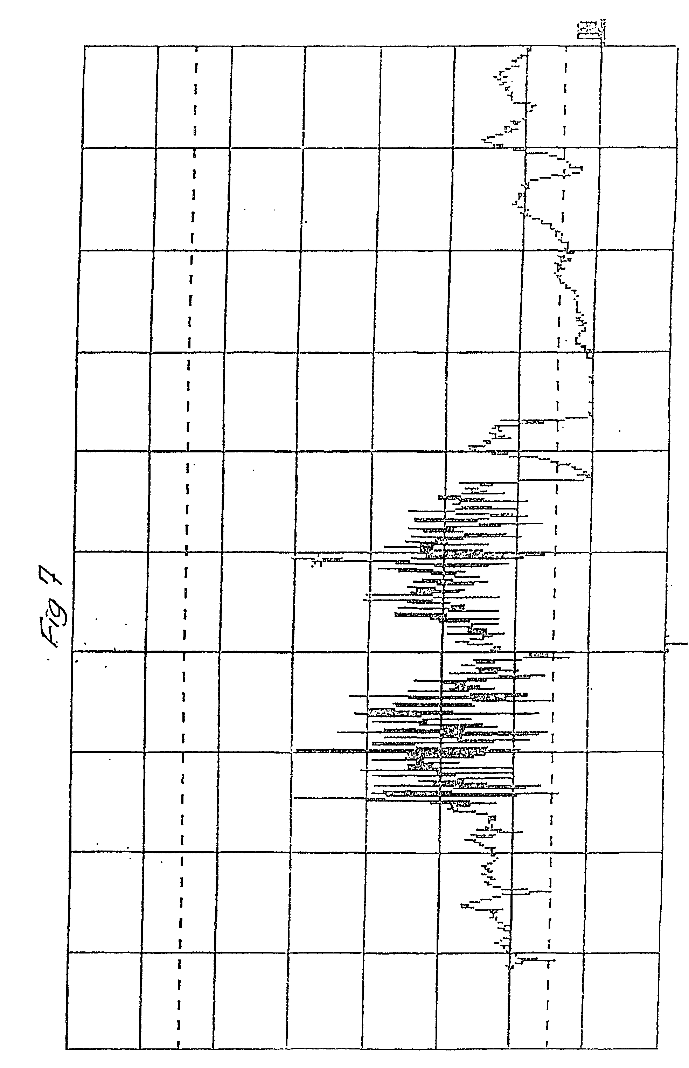

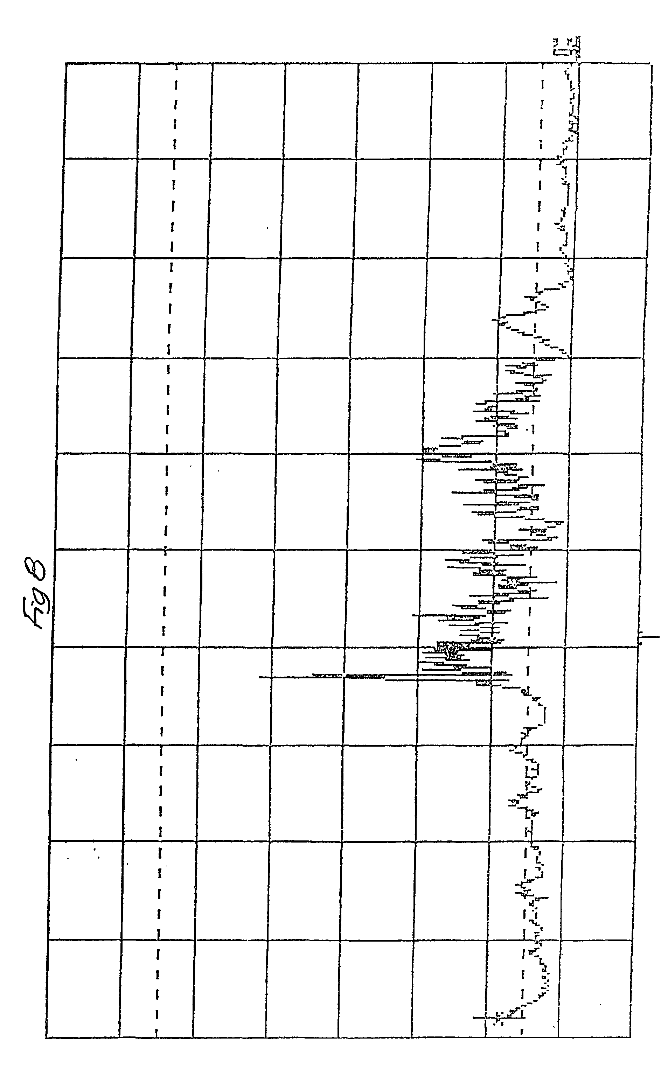

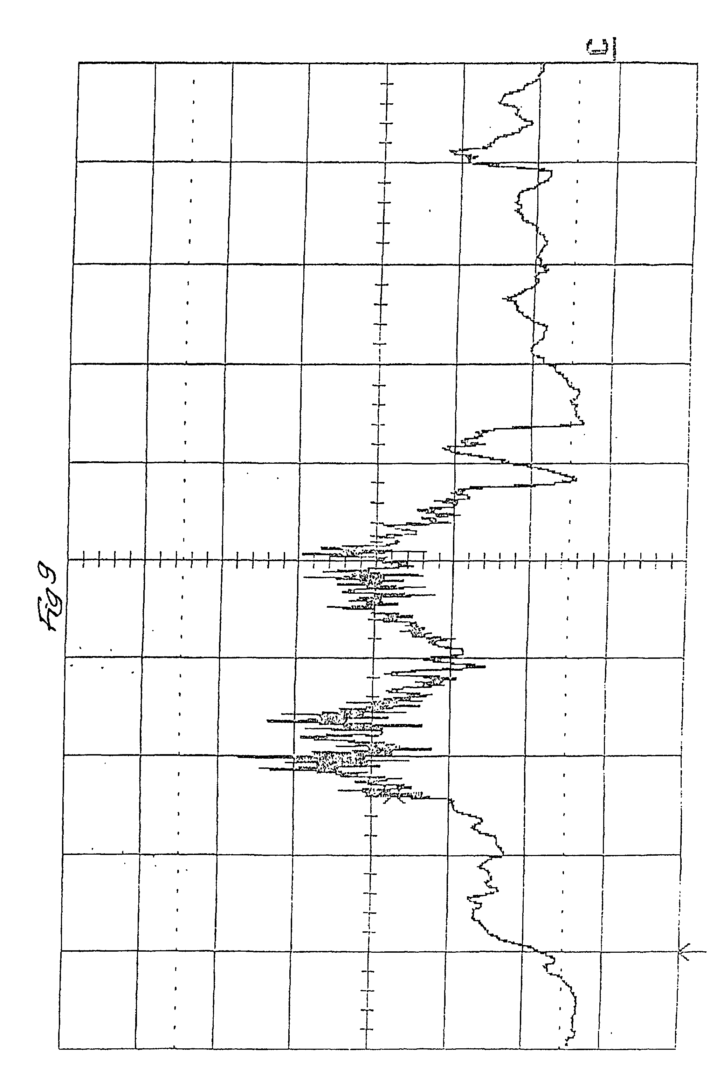

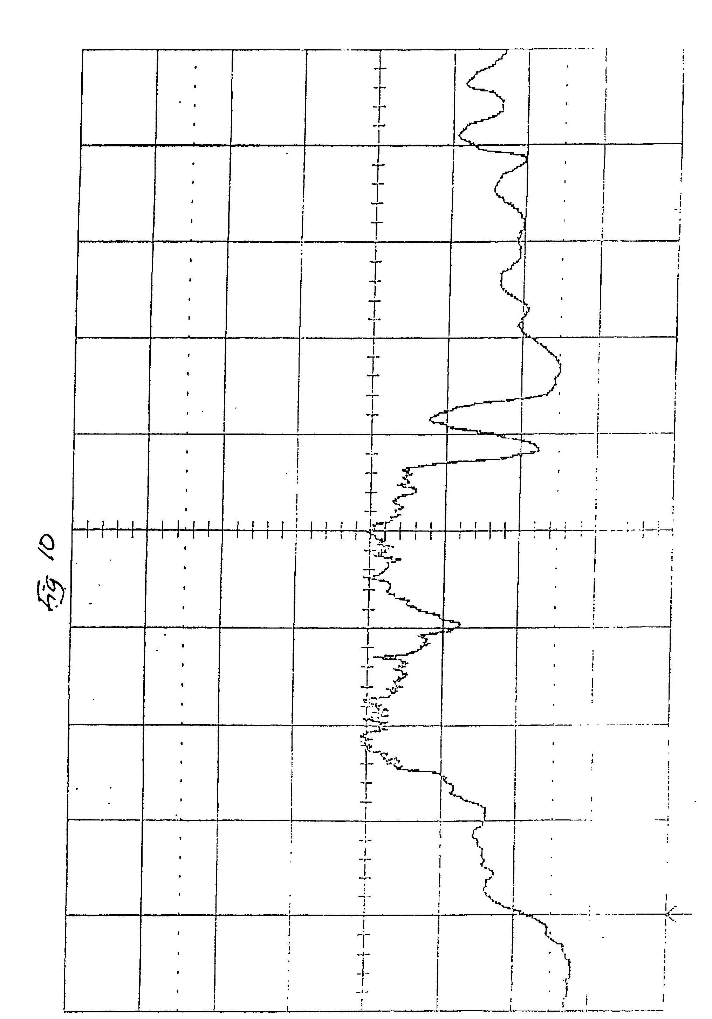

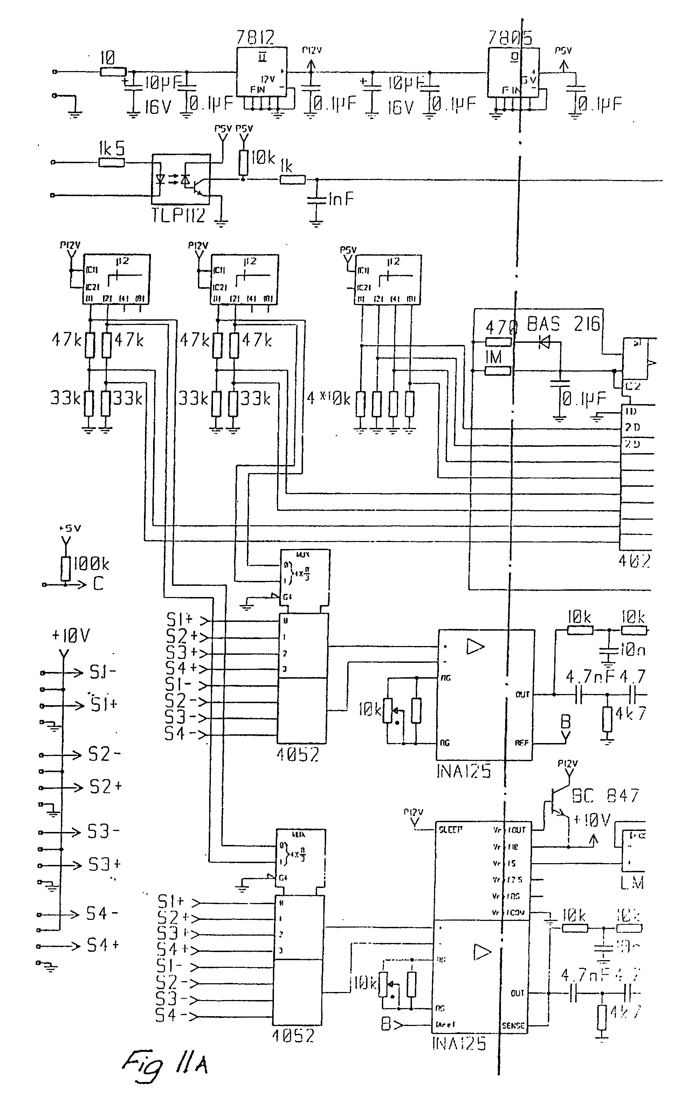

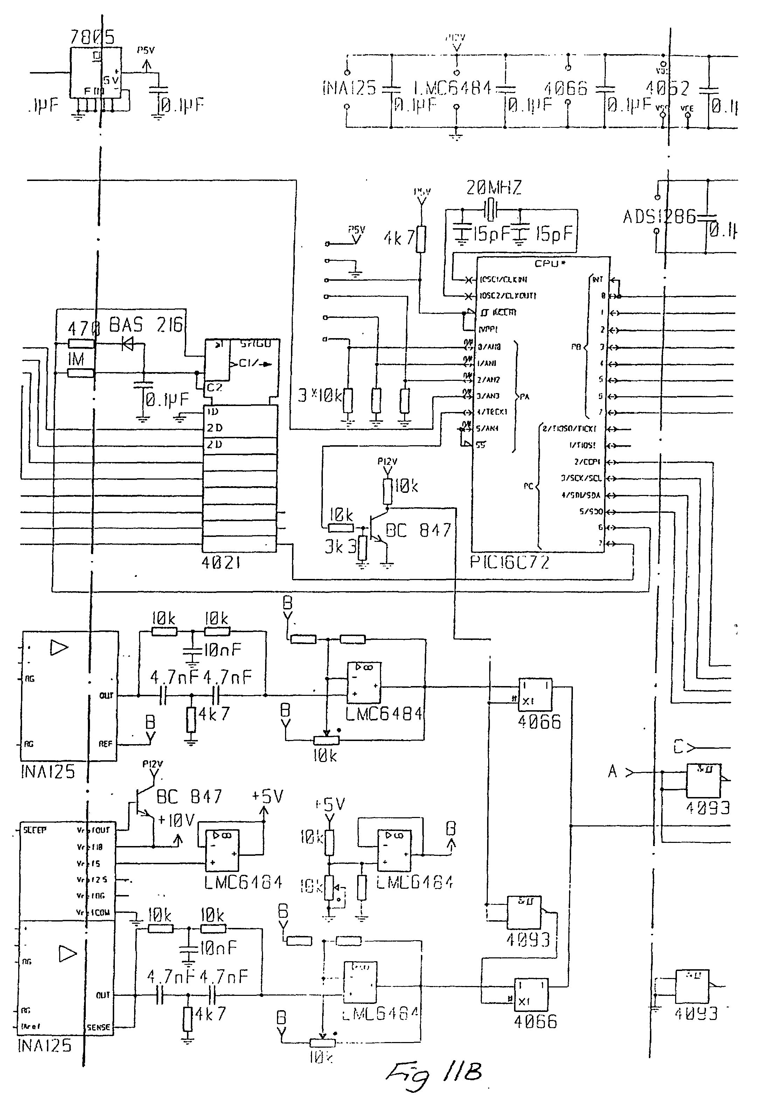

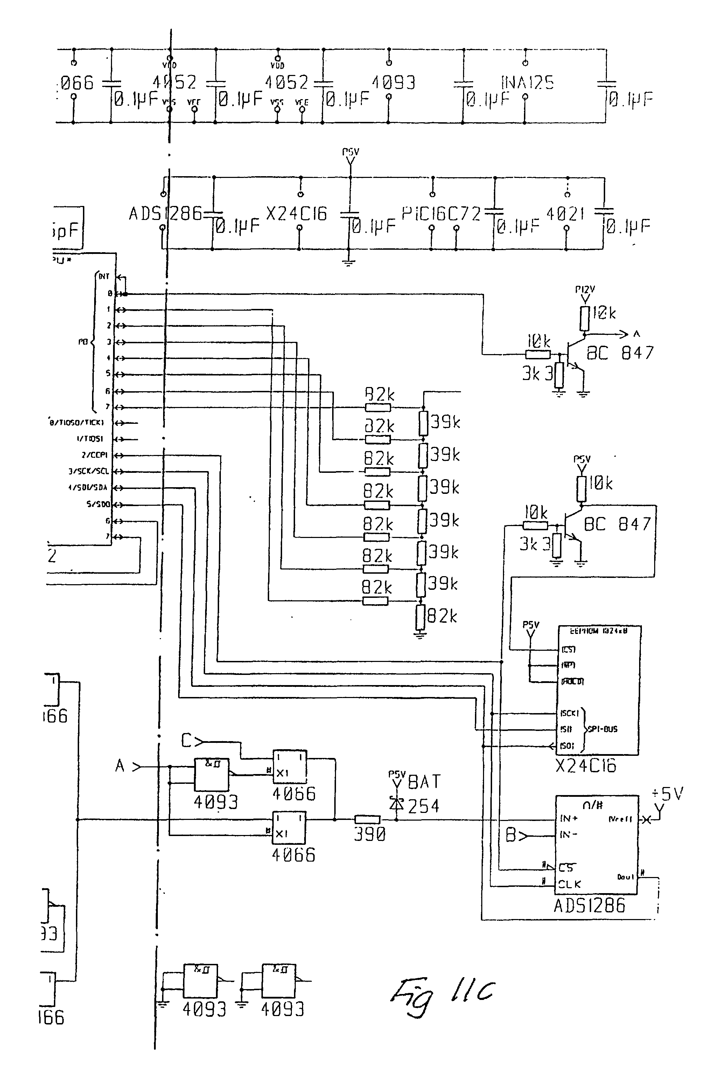

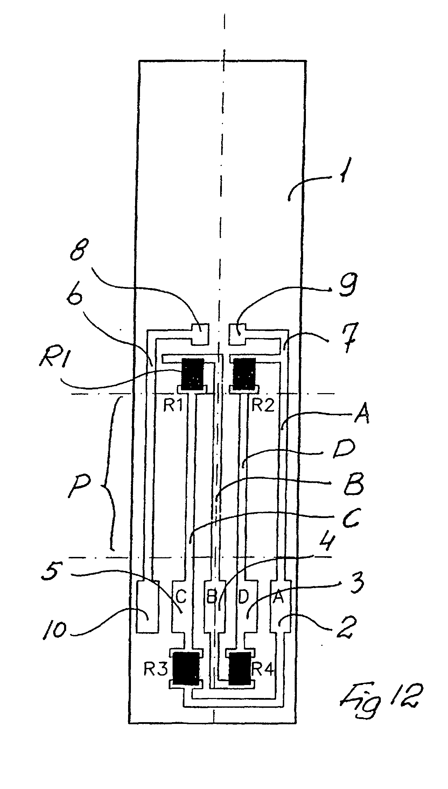

One embodiment of an apparatus according to the present invention will now be described in greater detail hereinbelow, with reference to the accompanying drawings. Fig. 1 shows, on a large scale, a top a plan view of a part of one embodiment of an apparatus according to the present invention. Fig. 2 shows a coupling diagram of portions of the part shown in Fig. 1. Fig. 3 is a perspective view of one embodiment of an apparatus according to the present invention. Fig. 4 is a side elevation of the embodiment shown in Fig. 3. Fig. 5 is a perspective view of a construction with a number of apparatuses according to the present invention, combined to form a unit for monitoring a large number of threads. Fig. 6 is a perspective view of the construction illustrated in Fig. 5 with the parts included therein shown in the exploded state for purposes of clarity. Fig. 7 is a diagram of a signal from an apparatus according to the present invention in a loom. Fig. 8 is a diagram of a signal from an apparatus according to the present invention in another loom. Fig. 9 is a diagram of yet a further signal example. Fig. 10 is a diagram of the signal of Fig. 9 after filtering, e.g. mean value filtering. Fig. 11 is a coupling diagram of an electronic circuit for evaluating the signals from a construction of the type illustrated in Fig. 5. Fig. 12 shows a view similar to that of Fig. 1, of another embodiment of an apparatus according to the present invention.

In Fig. 1, there is shown a part of an apparatus according to the present invention on a scale of 10:1 and in the form of a ceramic plate or tongue 1 which is advantageously manufactured from aluminium oxide. On the plate or tongue 1, there are disposed four resistors R1, R2, R3 and R4 through the application of per se known thick film technology. The four resistors R1, R2, R3 and R4 are each placed in their corner of a rectangle and are interconnected to one another by means of electric conductors A, B, C, D disposed on the plate 1. At the end of the plate 1 located most proximal the resistors R3, R4, the conductors A, B, C, D have contact portions 2, 3, 4, 5. On the plate 1, there are provided further conductors 6 and 7 with connecting portions 8 and 9 for the possible arrangement of a thermistor between the contact portions 8 and 9 for generating a signal corresponding to the temperature of the plate at or in the resistors R1 and R2. The contact portions 8 and 9 are shown in greater detail within the circle. The conductor 6 has a contact portion 10 besides the remaining contact portions 2-5, and the conductor 7 is combined with the conductor A. Between the resistors R1 and R2 and the resistors R3 and R4, the plate or tongue 1 has a tensioning portion which is illustrated by means of a ghosted line most proximal the resistors R1 and R2 and a ghosted line most proximal the resistors R3 and R4. It has proved to be an advantage that the resistors R3 and R4 are exposed, like the resistors R1 and R2. Thus, the resistors R1 and R2, as well as the resistors R3 and R4, should in principle be free from any possible assembly or tensioning devices. The plate 1 or tongue 1 is tensioned such that the opposite end in relation to the contact regions 2-5 is located in the path of the thread which is to be monitored. On bending of the plate or tongue 1, the resistors R1 and R2 will be subjected to a tensile stress, whereby the resistance therein will change. This change in resistance is sensed with the aid of a per se known electronic circuit arrangement which is preferably coupled via a differential amplifier to the bridge circuit illustrated in Fig. 2, which reflects the arrangement of resistors R1, R2, R3 and R4 on the plate or tongue 1. It should here be observed that the downward bending of the end of the plate or the tongue 1 is a matter of perhaps at most a tenth of a millimetre, and that downward bendings of the order of some hundredths of a millimetre may be sensed. Depending upon the desired resolution, it is in principle possible to obtain a readable signal right down to zero downward bending.

The bridge circuit illustrated in Fig. 2 is coupled to a differential amplifier via the coupling points C and D, while the coupling points A and B are connected to a current source for supply of a substantially constant voltage. With the aid of the differential amplifier, the signal generated over points C and D will thus be, as it were "added" regardless of sign, so that there will be obtained a signal from negative value through zero to positive value. By such means, the generation of a signal is made possible in response to extremely slight changes of the resistance in the resistors R1 and R2 on bending of the tongue or the plate 1.

If it were to prove that the temperature might involve a problem, a software temperature compensation may be executed with the aid of a thermistor provided between the connections 8 and 9 which, via the conductors 6 and 7, is coupled to the electronic signal generating circuit in Fig. 11.

Figs. 3-6 illustrate the manner in which the plate or the tongue 1 illustrated in Fig. 1 is mounted in the path of a thread. A body 11 is provided with an inlet guide eye 12 and an outlet guide eye 13. A thread 14 is shown in Fig. 3 in one position and in Fig. 4, the thread is shown in an upper position ÖP and a lower position UP for illustrating that the path of the thread 14 between a first break pin 15 and a second break pin 16 will be substantially constant, regardless of whether the thread enters in the upper path or the lower path, or whether the thread departs in the upper path or the lower path. Substantially centrally between the break pins 15 and 16, the thread touches a wear portion 17 on the opposite end of the plate or the tongue 1 in relation to the resistors R1, R2, R3 and R4. For good signal quality, it has proved to be important that the angles of the thread 14 to and from the wear portion 17 on the end of the tongue or plate 1 are substantially constant. The plate or tongue 1 is tensioned in between two pads 18 and 19. A tensioning portion 20 illustrated in Fig. 6 urges the tongue or the plate 1 against a suitable surface in the housing 21 via the pads 18 and 19. The pads 18 and 19 may in practice consist of glue layers instead of, for example, hard rubber pieces. The housing 21 is preferably manufactured from aluminium and is mounted on a plate 22 which is a printed conductor plate and carries a number of electronic components included in the electronic evaluation circuit. The contact points 2, 3, 4, 5 and 10 are connected to suitable conductors on the printed plate 22. The housing 21 is secured on the plate 22 in a per se known manner, e.g. by means of screws or similar anchorage devices.

In that case when it is a matter of monitoring a single thread 14, the body 11 is provided with two end pieces of substantially the same type as the end walls 23 and 24 shown in Fig. 5. Figs. 5 and 6 illustrate an arrangement with eight apparatuses according to the present invention disposed beside or above one another. In this case, the body 11 is intended for all eight housings 21. Furthermore, the plate 22 is common to all housings 21, and in addition there is a common lid or upper portion 25.

Fig. 7 is a diagram of a signal obtained by means of an apparatus according to the present invention corresponding to static tension in a thread during a pick in a loom of first type. Calibration has taken place to 80 cN/square. Fig. 8 is a diagram of a signal representing the static tension in a thread during a pick in a loom of a type other than the loom of Fig. 7. In Fig. 8, the calibration is 50 cN/square. Fig. 9 shows a further diagram of a signal from an apparatus according to the present invention representing the static thread tensioning in a thread during a pick in a loom of substantially the same type as in Fig. 7. Fig. 10 is a diagram of the signal in Fig. 9 after filtering of the signal. In this case, a so-called mean value filtering has been carried out, whereafter the signal will be simpler to study in detail.

Fig. 11 is a coupling diagram of an electronic circuit for handling signals from an assembly or a construction of the type according to the present invention as shown in Fig. 5. The printed circuit plate 22 is connectable via a band cable to the circuit illustrated in Fig. 11 via the plug connection schematically illustrated in the lower left-hand corner. The separately illustrated circuits at the top are intended for supplying the remaining components in the diagram. To a person skilled in the art, there would appear to be no major difficulties in realising the electronic circuit illustrated in Fig. 11. The circuit illustrated in Fig. 11 is further rehearsed to be adapted to meet different software requirements.

The electronic circuit in Fig. 11 is merely an exemplification of a monitoring arrangement with apparatuses according to the present invention. In the illustrated circuitry, the CPU is programmed to monitor single picks and/or double picks in a loom. The signal obtained on PL6/3 may be processed and employed in different ways for meeting different needs. The signal is exemplified in Figs. 7-10 as an analog signal, but it may; naturally, readily be converted into a digital signal. A synchronisation pulse from the loom prepares the circuit in Fig. 11 for a single pick or double pick and from which plate or longue 1 or plates or tongues a signal is to be expected. Immediately thereafter, a temperature compensation possibly takes place with the aid of a thermistor which is connected to the plug "Thermin". A flag signal may be employed for defining the time period it is desirable to monitor the signal. The pins "Offset Adj" are in principle experimental for desired adjustments, but may be replaced by fixed signals. The network R3, R4, R5, C6, C7 and C8 is utilised for resonance filtering. The plugs "P5V" receive an input voltage of 5V, while the plugs "P12V" receive an input voltage of 12V.

The present invention is not restricted to the embodiment described in the foregoing, but many modifications are possible without departing from the inventive concept as this is defined in the appended Claims. It is further possible to designate the apparatus illustrated in Fig. 3, e.g. according to the present invention as a transducer or signal emitter. The signal obtained from the circuit in Fig. 11 may be employed as a pick monitor if desired, which may imply that the loom is stopped if the signal is absent because of a thread breakage. The major advantage inherent in the apparatus according to the present invention resides in the fact that the placing of the resistors on the plate 1 gives an equilibrium of vibration stresses which, while not being totally complete, is almost complete so that the obtained signal may be said to be vibration-damped. Similarly, it is of importance that the conductors A-B and 6, as well as the contacts 2-5 and 10 are designed and placed in such a manner that their action, primarily mechanical action, on the plate 1 and thereby the resistors R1-R4, in particular R1 and R2, will be as slight as possible.

Fig. 12 shows another embodiment of the apparatus according to the present invention. The same reference numerals are applied to the same parts as in the embodiment of Fig. 1. The embodiment in Fig. 12 has a considerably larger tensioning portion P between the ghosted lines. The tensioning portion P extends a distance from the contact portions 2, 3, 4, 5 and 10 to the immediate proximity of the resistors R1 and R2. Further, the resistors R3 and R4 are placed on the outside of the contact portions 2, 3, 4, 5 and 10. This embodiment has proved to give a more unambiguous and better signal.

## Claims

1. An apparatus for generating an electric signal corresponding to a force exercised thereon, e.g. a force arising out of the tension in a thread, preferably the tension in a thread in a loom or sewing machine, a mechanically bendable, tongue-like plate (1) being positioned in the path of the thread (14) in order to be bent by the thread (14) in correspondence to the force exercised in the thread, **characterised in that** at least one film resistor (R1, R3) is disposed on the plate (1) on each side of a tensioning portion and is coupled into an electronic circuit for generating a signal corresponding to the mechanical action of the plate (1) to which the film resistor (R1, R3) is subjected on bending of the plate (1), and that the path of the thread (14) past the plate (1) is substantially constant.

2. The apparatus as claimed in Claim 1, **characterised in that** the plate (1) is manufactured from a ceramic aluminium oxide, and that the resistor (R1, R3) is disposed on the plate (1) in accordance with per se known thick film technology.

3. The apparatus as claimed in Claims 1 and 2, **characterised in that** four resistors (R1, R2, R3, R4) are disposed on the plate (1) in a bridge coupling (Fig. 2), which is supplied with a constant voltage (A, B) and which is coupled (C, D) to an electronic circuit for generating a signal corresponding to the change in resistance in the bridge coupling.

4. The apparatus as claimed in Claim 3, **characterised in that** the four resistors (R1, R2, R3, R4) are interconnected with four conductors, of which opposing conductors (A, B) are coupled to a current source for supply of the constant voltage, and of which the two other opposing conductors (C, D) are coupled to the electronic circuit.

5. The apparatus as claimed in Claim 4, **characterised in that** the resistors (R1, R2) between the conductors (A, D) of negative and positive potential are located on the one side of a tensioning portion of the plate (1), and that the resistors (R3, R4) between the conductors of the same potential are located on the other side of the tensioning portion.

6. The apparatus as claimed in Claim 5, **characterised in that** the resistors (R1, R2) between the conductors of different potential on said one side of the tensioning portion are placed so as to be exposed to bending by the plate (1) on said one side of the tensioning portion.

7. The apparatus as claimed in Claims 5 and 6, **characterised in that** a thermistor is placed in the proximity of the resistors (R1, R2) on said one side of the tensioning portion for generating an electric signal corresponding to the temperature in and/or at said resistors (R1, R2) for possible compensation of the signal obtained from the bridge coupling for the prevailing temperature.

8. The apparatus as claimed in Claims 2 and 4, **characterised in that** the conductors (A, B, C, D) in the bridge coupling are disposed direct on the plate (1) consisting of ceramic aluminium oxide.

## Patentansprüche

1. Vorrichtung zur Erzeugen eines elektrischen Signals in Übereinstimmung mit einer darauf ausgeübten Kraft, z.B. einer Kraft, die durch die Spannung in einem Faden entsteht, vorzugsweise die Spannung in einem Faden in einem Webstuhl oder einer Nähmaschine, wobei eine mechanisch biegbare, zungenartige Platte (1) in dem Pfad des Fadens (14) positioniert ist, um von dem Faden (14) in Übereinstimmung mit der Kraft, die in dem Faden ausgeübt wird, gebogen zu werden, **dadurch gekennzeichnet, dass** wenigstens ein Filmwiderstand (R1, R3) auf der Platte (1) auf jeder Seite eines Spannabschnittes angeordnet und in eine elektronische Schaltung gekoppelt ist, um ein Signal in Übereinstimmung mit der mechanischen Wirkung der Platte (1) zu erzeugen, welcher der Filmwiderstand (R1, R3) beim Biegen der Platte (1) ausgesetzt ist, und dass der Pfad des Fadens (14) über die Platte (1) hinaus im Wesentlichen konstant ist.

2. Vorrichtung nach Anspruch 1, **dadurch gekennzeichnet, dass** die Platte (1) aus einem keramischen Aluminiumoxid hergestellt ist und dass der Widerstand (R1, R3) auf der Platte (1) gemäß einer an sich bekannten Dickfilmtechnologie angeordnet ist.

3. Vorrichtung nach Anspruch 1 und 2, **dadurch gekennzeichnet, dass** vier Widerstände (R1, R2, R3, R4) auf der Platte (1) in einer Brückenkopplung (Fig. 2) angeordnet sind, die mit einer konstanten Spannung (A, B) versorgt wird und an eine elektronische Schaltung gekoppelt ist (C, D), um ein Signal zu erzeugen, das der Änderung des Widerstands der Brückenkopplung entspricht.

4. Vorrichtung nach Anspruch 3, **dadurch gekennzeichnet, dass** die vier Widerstände (R1, R2, R3, R4) durch vier Leiter miteinander verbunden sind, von denen sich gegenüberliegende Leiter (A, B) an eine Stromquelle zur Zuleitung der konstanten Spannung gekoppelt sind, und von denen die zwei anderen sich gegenüberliegenden Leiter (C, D) an die elektronische Schaltung gekoppelt sind.

5. Vorrichtung nach Anspruch 4, **dadurch gekennzeichnet, dass** die Widerstände (R1, R2) zwischen den Leitern (A, D) mit negativem und positivem Potenzial auf der einen Seite eines Spannabschnittes der Platte (1) und die Widerstände (R3, R4) zwischen den Leitern mit demselben Potenzials auf der anderen Seite des Spannabschnittes angeordnet sind.

6. Vorrichtung nach Anspruch 5, **dadurch gekennzeichnet, dass** die Widerstände (R1, R2) zwischen den Leitern verschiedenen Potenzials auf der einen Seite des Spannabschnittes so platziert sind, dass sie dem Biegen der Platte (1) auf der einen Seite des Spannabschnittes ausgesetzt sind.

7. Vorrichtung nach Anspruch 5 und 6, **dadurch gekennzeichnet, dass**, für eine mögliche Kompensation des Signals, das von der Brückenkopplung für die herrschende Temperatur erhalten wird, ein Thermistor in der Nähe der Widerstände (R1, R2) auf der einen Seite des Spannabschnittes zur Erzeugung eines elektronischen Signals angeordnet ist, das der Temperatur in und/oder an den Widerständen (R1, R2) entspricht.

8. Vorrichtung nach Anspruch 2 und 4, **dadurch gekennzeichnet, dass** die Leiter (A, B, C, D) in der Brückenkopplung direkt auf der Platte (1) angeordnet sind, die aus keramischem Aluminiumoxid besteht.

## Revendications

1. Appareil de génération d'un signal électrique correspondant à une force s'exerçant sur lui, par ex. une force créée par la tension dans un fil, de préférence la tension dans un fil dans un métier ou une machine à coudre, une plaquette (1) semblable à une languette, mécaniquement flexible, étant mise en place dans le trajet du fil (14) de façon à être fléchie pour le fil (14) conformément à la force s'exerçant sur le fil, **caractérisé en ce qu'**au moins une résistance à couche (R1, R3) est disposée sur la plaquette (1) de chaque côté d'une partie de mise en tension et est couplée dans un circuit électronique pour générer un signal correspondant à l'action mécanique de la plaquette (1) à laquelle est soumise la résistance à couche (R1, R3) lors de la flexion de la plaquette (1), et **en ce que** le trajet du fil (14) devant la plaquette (1) est sensiblement constant.

2. Appareil selon la revendication 1, **caractérisé en ce que** la plaquette (1) est fabriquée à partir d'un oxyde d'aluminium céramique, et **en ce que** la résistance (R1, R2) est disposée sur la plaquette (1) conformément à la technique des couches épaisses connue en soi.

3. Appareil selon les revendications 1 et 2, **caractérisé en ce que** quatre résistances (R1, R2, R3, R4) sont disposées sur la plaquette (1) suivant un montage en pont (figure 2), alimenté par une tension constante (A, B) et couplé (C, D) à un circuit électronique pour générer un signal correspondant à la variation de la valeur ohmique dans le montage en pont.

4. Appareil selon la revendication 3, **caractérisé en ce que** les quatre résistances (R1, R2, R3, R4) sont interconnectées par quatre conducteurs, dont des conducteurs opposés (A, B) sont couplés à une source de courant pour l'alimentation de la tension constante, et dont les deux autres conducteurs opposés (C, D) sont couplés au circuit électrique.

5. Appareil selon la revendication 4, **caractérisé en ce que** les résistances (R1, R2) entre les conducteurs (A, D) de potentiel négatif et positif sont situées d'un premier côté d'une partie de mise en tension de la plaquette (1), et **en ce que** les résistances (R3, R4) entre les conducteurs du même potentiel sont situées de l'autre côté de la partie de mise en tension.

6. Appareil selon la revendication 5, **caractérisé en ce que** les résistances (R1, R2) entre les conducteurs de potentiel différent dudit premier côté de la partie de mise en tension sont placées de manière à être exposée à la flexion de la plaquette (1) dudit premier côté de la partie de mise en tension.

7. Appareil selon les revendications 5 et 6, **caractérisé en ce qu'**une thermistance est placée à proximité des résistances (R1, R2) dudit premier côté de la partie de mise en tension pour générer un signal électrique correspondant à la température dans et/ou au niveau des résistances (R1, R2) en vue d'une compensation éventuelle de l'effet de la température ambiante sur le signal obtenu du montage en pont.

8. Appareil selon les revendications 2 et 4, **caractérisé en ce que** les conducteurs (A, B, C, D) dans le montage en pont sont disposés directement sur la plaquette (1) constituée d'oxyde d'aluminium céramique.
